# EUROPÄISCHE PATENTANMELDUNG

(11) **EP 2 246 959 A1**
(43) Veröffentlichungstag der Anmeldung: **03.11.2010**
(21) Anmeldenummer: 10157036.4
(22) Anmeldetag: 19.03.2010
(51) Int. Cl.: H02J 9/00

(54) **Haushaltsgerät mit einer Schaltungsanordnung und entsprechendes Verfahren**

(30) Priorität: 07.04.2009 DE 102009002271
(71) Anmelder: BSH Bosch und Siemens Hausgeräte GmbH, 81739 München (DE)
(72) Erfinder: Bruß, Dietmar, 93173, Wenzenbach (DE); Helmschmidt, Holger, 93049, Regensburg (DE); Schmid, Erich, 93173, Wenzenbach (DE)

(57) **Zusammenfassung**

In einem Haushaltsgerät soll im Stand-by-Zustand elektrische Energie gespart werden. Es wird eine Schaltungsanordnung (1) bereitgestellt, bei welcher aus einer Versorgungswechselspannung (U_{N}) eine erste Betriebsgleichspannung (U₁) für zumindest einen ersten Verbraucher (6) bereitgestellt wird. Aus der ersten Betriebsgleichspannung (U₁) wird eine zweite Betriebsgleichspannung (U₂) bereitgestellt, welche wertmäßig niedriger als die erste Betriebsgleichspannung (U₁) ist. Es sind Mittel (12, 13, 14) zum Einstellen der ersten Betriebsgleichspannung (U₁) bereitgestellt, die im Aktivzustand der Schaltungsanordnung die erste Betriebsgleichspannung (U₁) auf einen ersten Wert einstellen und beim Umschalten in den Stand-by-Zustand die erste Betriebsgleichspannung (U₁) von dem ersten Wert auf einen zweiten Wert absenken.

## Beschreibung

Die Erfindung betrifft ein Haushaltsgerät mit einer Schaltungsanordnung der im Oberbegriff des Patentanspruchs 1 angegebenen Gattung. Die Erfindung bezieht sich ferner auf ein entsprechendes Verfahren.

Elektrische Geräte können bekanntlich zwischen einem Aktivzustand und einem gegenüber dem Aktivzustand energieverbrauchsreduzierten Wartezustand (auch unter der Bezeichnung "Stand-by" bekannt) umgeschaltet werden. Beispielsweise ist aus dem Dokument EP 0 689 351 B1 eine Schaltungsanordnung für fernbedienbare Fernsehgeräte bekannt, welche das Umschalten eines solchen Geräts zwischen dem Aktivzustand und dem Wartezustand ermöglicht.

Aus dem Dokument DE 10 2006 029 708 A1 sind ein Verfahren und eine Vorrichtung zur Steuerung der Wartezustand-Leistung einer Waschmaschine bekannt. Die Waschmaschine kann zwischen einem Aktivzustand, in welchem ein Netzteil der Waschmaschine den erforderlichen Strom zuführt, und einem Wartezustand, in welchem das Netzteil ausgeschaltet ist, umgeschaltet werden.

Die Druckschrift JP 2005 027 354 A beschreibt eine Schaltungsanordnung für einen Fernsehempfänger oder eine Klimaanlage. Diese Schaltungsanordnung beinhaltet ein Netzteil, welches aus einer Netzspannung eine erste Gleichspannung bereitstellt. Ein Spannungswandler wandelt die erste Gleichspannung in eine zweite Gleichspannung, die geringer als die erste Gleichspannung ist. Mit der zweiten Gleichspannung wird ein Mikrocontroller versorgt. Mit der ersten Gleichspannung wird eine Vielzahl von elektrischen Verbrauchern versorgt. Die Amplitude der ersten Gleichspannung kann mit Hilfe eines Optokopplers beeinflusst werden. Und zwar ist ein Optotransistor des Optokopplers mit einem Steuereingang des Netzteils verbunden, während die Leuchtdiode des Optokopplers einerseits mit dem Ausgang des Netzteils und andererseits mit einer regelbaren Diode gekoppelt ist. Ein Spannungsteiler mit drei Widerständen greift die erste Gleichspannung ab und teilt sie, so dass die geteilte Spannung am Steuereingang der regelbaren Diode anliegt. Einer der Widerstände des Spannungsteilers kann wahlweise zugeschaltet werden, und die Amplitude der geteilten Spannung kann somit verändert werden. Somit weist die regelbare Diode wahlweise zwei unterschiedliche Durchbruchsspannungen auf, und es können wahlweise unterschiedliche Amplituden der ersten Gleichspannung eingestellt werden.

Eine Schaltungsanordnung zum Betreiben eines Bildschirmgerätes ist aus dem Dokument US 5,920,466 A bekannt.

Es ist Aufgabe der Erfindung, eine Lösung anzuzeigen, wie elektrische Energie in einem Haushaltsgerät gespart werden kann.

Diese Aufgabe wird erfindungsgemäß durch ein Haushaltsgerät mit den Merkmalen gemäß Patentanspruch 1 gelöst, wie auch durch ein Verfahren mit den Merkmalen gemäß Patentanspruch 7. Vorteilhafte Ausführungen der Erfindung sind Gegenstand der abhängigen Ansprüche.

Ein erfindungsgemäßes Haushaltsgerät umfasst eine Schaltungsanordnung, die zum Betreiben eines Haushaltsgeräts ausgebildet ist. Die Schaltungsanordnung umfasst einen Schaltungseingang zum Anlegen einer Versorgungswechselspannung. Mit dem Schaltungseingang ist ein Schaltnetzteil zum Bereitstellen einer ersten Betriebsgleichspannung zwischen einem Schaltungspol und einem Bezugspotential gekoppelt. Mit der ersten Betriebsgleichspannung ist zumindest ein erster elektrischer Verbraucher versorgbar. Die Schaltungsanordnung umfasst einen mit dem Schaltungspol gekoppelten Spannungswandler zum Bereitstellen einer zweiten Betriebsgleichspannung für zumindest einen zweiten elektrischen Verbraucher, wobei die zweite Betriebsgleichspannung wertmäßig niedriger als die erste Betriebsgleichspannung ist. Eine Steuereinrichtung ist dazu ausgelegt, die Schaltungsanordnung zwischen einem Aktivzustand und einem Wartezustand umzuschalten. Es sind Mittel zum Einstellen der ersten Betriebsgleichspannung bereitgestellt, die im Aktivzustand der Schaltungsanordnung die erste Betriebsgleichspannung auf einen ersten Wert einstellen und beim Umschalten in den Wartezustand die erste Betriebsgleichspannung von dem ersten Wert auf einen zweiten Wert absenken.

Die Erfindung beruht somit auf der Erkenntnis, dass bei einer Schaltungsanordnung, bei welcher zunächst eine erste Betriebsgleichspannung und dann eine niedrigere zweite Betriebsgleichspannung bereitgestellt werden, die meisten Energieverluste bei der Umwandlung der ersten Betriebsgleichspannung in die zweite Betriebsgleichspannung entstehen. Diese Verluste können in dem Wartebetrieb dann auf ein Minimum reduziert werden, wenn die erste Betriebsgleichspannung auf einen zweiten Wert abgesenkt wird. Die Erfindung macht sich dabei die Tatsache zunutze, dass derjenige elektrische Verbraucher, welcher mit der ersten Betriebsgleichspannung versorgt wird, im Wartezustand nicht in Betrieb genommen wird, das heißt nicht angesteuert werden muss.

Durch das Absenken der ersten Betriebsgleichspannung von dem ersten Wert auf den zweiten Wert kann im Haushaltsgerät Energie gespart werden, da der Spannungswandler eine kleinere Absenkung der Spannung als im Aktivzustand bewirken muss. Dabei verbleibt die zweite Betriebsgleichspannung sowohl im Wartezustand als auch im Aktivzustand konstant. Somit kann der zweite elektrische Verbraucher - der in der Regel die Steuereinrichtung ist - auch im Wartezustand mit elektrischer Energie versorgt werden. Die Steuereinrichtung kann demnach im Wartezustand auf Eingaben von einer Bedienperson warten und nach Erhalten einer vorbestimmten Eingabe die erste Betriebsgleichspannung wieder auf den ersten Wert erhöhen, dann kann auch der erste elektrische Verbraucher versorgt werden.

Die Mittel zum Einstellen der ersten Betriebsgleichspannung sind mit einem Regelanschluss des Schaltnetzteils gekoppelt und greifen somit in eine Regelschleife des Schaltnetzteils ein. Dann können die Mittel zum Einstellen der ersten Betriebsgleichspannung eine Führungsgröße an den Regelanschluss des Schaltnetzteils übermitteln, und das Schaltnetzteil kann dann die erste Betriebsgleichspannung abhängig von dieser Führungsgröße steuern. Die Führungsgröße ist bevorzugt mit einem Soll-Wert für die erste Betriebsgleichspannung korreliert oder stellt diesen Soll-Wert dar. Also greifen die Mittel zum Einstellen der ersten Betriebsgleichspannung in die Regelschleife des Schaltnetzteils ein. Die erste Betriebsgleichspannung kann somit ohne viel Aufwand durch einfaches Übermitteln der Führungsgröße an den Regelanschluss des Schaltnetzteils eingestellt werden.

Die Mittel zum Einstellen der ersten Betriebsgleichspannung umfassen einen Optokoppler, dessen Transistor mit dem Regelanschluss des Schaltnetzteils gekoppelt ist und dessen Diode einerseits mit dem Schaltungspol und andererseits über eine erste Zenerdiode mit dem Bezugspotential gekoppelt ist. Eine zweite Zenerdiode ist parallel zur ersten Zenerdiode schaltbar. Die erste Zenerdiode weist dann eine solche Durchbruchsspannung auf, die auf den ersten Wert der ersten Betriebsgleichspannung abgestimmt ist, und die zweite Zenerdiode weist eine solche Durchbruchsspannung auf, die auf den zweiten Wert der ersten Betriebsgleichspannung abgestimmt ist. Demnach wird die Führungsgröße über den Optokoppler an den Regelanschluss des Schaltnetzteils übermittelt. Im Aktivzustand, also wenn die erste Betriebsgleichspannung auf den ersten Wert eingestellt ist, ist die erste Zenerdiode in Reihe mit der Diode des Optokopplers geschaltet, der erste Wert der ersten Betriebsgleichspannung stellt die Summe der Durchbruchsspannung der ersten Zenerdiode und der über der Diode des Optokopplers abfallenden Spannung dar. Dann fließen zwischen dem Schaltungspol und dem Bezugspotential, das heißt über die Reihenschaltung der ersten Zenerdiode und der Diode des Optokopplers, sehr geringe Ströme. Wird nun die zweite Zenerdiode parallel zur ersten Zenerdiode geschaltet, überbrückt sie die erste Zenerdiode, und es fließt Strom über die zweite Zenerdiode und somit auch über die Diode des Optokopplers. Dieser Strom wird durch den Spannungsabfall bewirkt, da die zweite Zenerdiode eine kleinere Durchbruchsspannung als die erste Zenerdiode aufweist. Der über die Diode des Optokopplers fließende Strom bewirkt dann ein Leuchten der Diode des Optokopplers, und der Transistor des Optokopplers wird angesteuert. Das Schaltnetzteil erhält eine Rückkopplung von dem Transistor und beginnt, die erste Betriebsgleichspannung auf den zweiten Wert zu reduzieren. Der Transistor übermittelt also die Führungsgröße an den Regelanschluss des Schaltnetzteils. Auf diesem Wege gelingt es, in die Regelschleife des Schaltnetzteils durch Einsatz lediglich eines Optokopplers und zweier Zenerdioden einzugreifen.

Unter einem Haushaltsgerät wird ein Gerät verstanden, das zur Haushaltsführung eingesetzt wird. Das kann ein Haushaltsgroßgerät sein, wie beispielsweise eine Waschmaschine, ein Wäschetrockner, eine Geschirrspülmaschine, ein Gargerät, eine Dunstabzugshaube, ein Kältegerät, eine Kühlgefrierkombination oder ein Klimagerät. Das kann aber auch ein Haushaltskleingerät sein, wie beispielsweise ein Kaffeevollautomat oder eine Küchenmaschine.

Bei der ersten und der zweiten Betriebsgleichspannung handelt es sich insbesondere um Gleichspannungen, die in einem Wertebereich bis 20 Volt liegen. Die zweite Betriebsgleichspannung ist stets niedriger als die erste Betriebsgleichspannung. Die zweite Betriebsgleichspannung kann dabei in einem Wertebereich zwischen 2 und 9 Volt liegen, sie beträgt vorzugsweise 5 oder 3,3 Volt. Der zweite Wert der ersten Betriebsgleichspannung liegt vorzugsweise zwischen der zweiten Betriebsgleichspannung und dem ersten Wert der ersten Betriebsgleichspannung. Der zweite Wert der ersten Betriebsgleichspannung - der im Wartezustand eingestellt wird - nähert sich insbesondere an die zweite Betriebsgleichspannung an, dann werden die durch den Spannungswandler verursachten Verluste auf ein Minimum reduziert. Der zweite Wert der ersten Betriebsgleichspannung kann zum Beispiel um 0,1 Volt bis 1 Volt höher als die zweite Betriebsgleichspannung liegen. Der erste Wert der ersten Betriebsgleichspannung liegt insbesondere in einem Wertebereich zwischen 5 und 15 Volt, er beträgt vorzugsweise 9 oder 12 Volt.

Die zweite Zenerdiode kann parallel zur ersten Zenerdiode besonders einfach geschaltet werden, wenn sie mit einem elektrischen Schalter in Reihe gekoppelt ist. Die Steuereinrichtung kann dann den elektrischen Schalter schließen und so die Schaltungsanordnung in den Wartezustand überführen.

Der Spannungswandler stellt einen Tiefsetzsteller dar, er setzt die erste Betriebsgleichspannung in die zweite Betriebsgleichspannung herab. Der Spannungswandler kann zum Beispiel ein Spannungsregler, wie insbesondere ein Längsregler sein. Hierdurch kann die zweite Betriebsgleichspannung stabilisiert und somit konstant gehalten werden, nämlich unabhängig davon, ob sich die Schaltungsanordnung im Aktivzustand oder im Wartezustand befindet. Mit einem solchen Spannungsregler gelingt es nämlich, eine konstante zweite Betriebsgleichspannung unabhängig von dem jeweils augenblicklichen Wert der ersten Betriebsgleichspannung einzustellen.

Es kann eine Bedieneinrichtung mit der Steuereinrichtung gekoppelt sein. Dann kann ein Eingabesignal mittels der Bedieneinrichtung erzeugt und an die Steuereinrichtung übermittelt werden. Das Eingabesignal bewirkt dann das Umschalten der Schaltungsanordnung zwischen dem Aktivzustand und dem Wartezustand. Dies kann zum Beispiel so erfolgen, dass eine Bedienperson eine vorbestimmte Eingabe an der Bedieneinrichtung vornimmt, zum Beispiel ein vorbestimmtes Bedienelement betätigt, und die Bedieneinrichtung erzeugt dann das Eingabesignal und übermittelt es an die Steuereinrichtung. Die Steuereinrichtung überführt dann die Schaltungsanordnung in den ausgewählten Zustand, das heißt in den Warte- oder Aktivzustand. Eine Bedienperson kann somit selbst das Überführen der Schaltungsanordnung zwischen dem Aktivzustand und dem Wartezustand veranlassen.

Zusätzlich oder alternativ kann vorgesehen sein, dass die Steuereinrichtung ein Taktsignal (clock) auswertet und abhängig von dieser Auswertung das Überführen der Schaltungsanordnung zwischen dem Aktivzustand und dem Wartezustand bewirkt. Dies kann zum Beispiel so erfolgen, dass die Steuereinrichtung die Schaltungsanordnung von dem Aktivzustand in den Wartezustand dann überführt, wenn keine Eingabe von einer Bedienperson über ein vorbestimmtes Zeitintervall erfolgt, d.h. wenn die Steuereinrichtung keine Eingabesignale von einer Bedieneinrichtung über das vorbestimmte Zeitintervall erhält. Dies kann auch so aussehen, dass eine Bedienperson ein Programm des Haushaltsgeräts einstellt, welches nach einer vorgewählten Zeit beginnen soll. Dann kann die Steuereinrichtung nach dem Auswählen des Programms die Schaltungsanordnung in den Wartezustand überführen und sie unmittelbar vor dem Beginn des Programms wieder in den Aktivzustand umschalten. Bei dieser Ausführungsform steuert die Steuereinrichtung das Umschalten zwischen dem Aktivzustand und dem Wartezustand also "selbst" und abhängig von der Zeit.

Zur Erfindung gehört auch ein Haushaltsgerät, welches eine erfindungsgemäße Schaltungsanordnung oder eine bevorzugte Ausführungsform derselben umfasst.

Bei einem erfindungsgemäßen Verfahren zum Betreiben eines Haushaltsgeräts wird eine Versorgungswechselspannung an einem Schaltungseingang einer Schaltungsanordnung bereitgestellt. Aus der Versorgungswechselspannung wird eine erste Betriebsgleichspannung zwischen einem Schaltungspol und einem Bezugspotential durch ein Schaltnetzteil bereitgestellt. Mit der ersten Betriebsgleichspannung wird zumindest ein erster elektrischer Verbraucher versorgt. Aus der ersten Betriebsgleichspannung stellt ein Spannungswandler eine zweite Betriebsgleichspannung für zumindest einen zweiten elektrischen Verbraucher bereit, wobei die zweite Betriebsgleichspannung wertmäßig niedriger als die erste Betriebsgleichspannung ist. Es erfolgt ein Umschalten der Schaltungsanordnung zwischen einem Aktivzustand und einem Wartezustand mittels einer Steuereinrichtung. Dabei wird die erste Betriebsgleichspannung im Aktivzustand auf einen ersten Wert eingestellt und beim Umschalten auf den Wartezustand von dem ersten Wert auf einen zweiten Wert herabgesetzt.

Die mit Bezug auf die erfindungsgemäße Schaltungsanordnung vorgestellten bevorzugten Ausführungsformen und insbesondere deren Vorteile gelten entsprechend für das erfindungsgemäße Haushaltsgerät sowie für das erfindungsgemäße Verfahren.

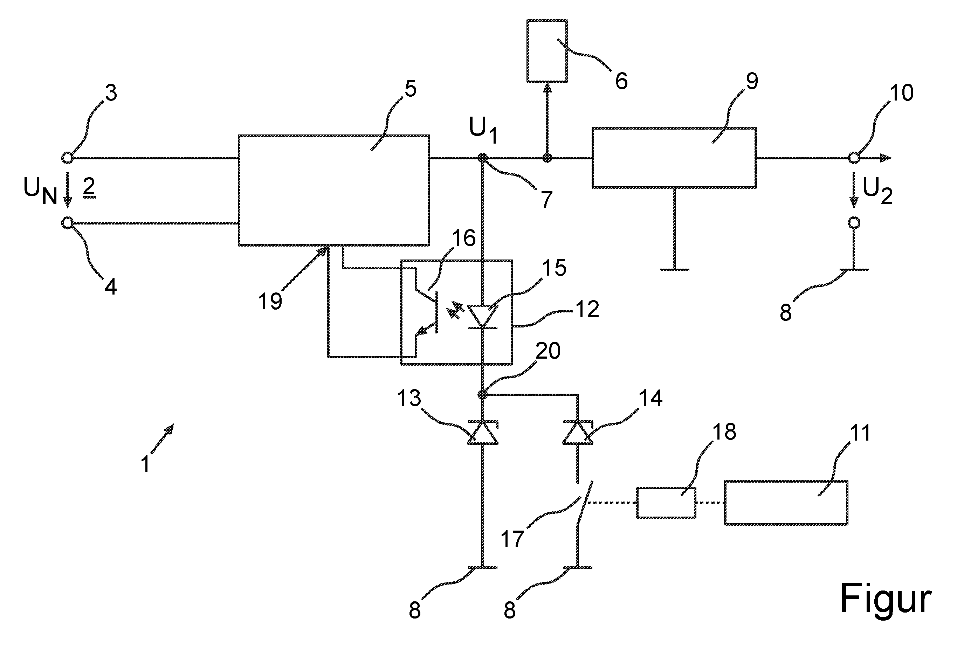

Weitere Merkmale der Erfindung ergeben sich aus den Ansprüchen, der Figur und der Figurenbeschreibung. Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Erfindung wird nun anhand eines bevorzugten Ausführungsbeispiels sowie unter Bezugnahme auf die beigefügte Zeichnung näher erläutert, wobei die einzige Figur eine Schaltungsanordnung gemäß einer Ausführungsform der Erfindung veranschaulicht.

Eine in der Figur dargestellte und im Ganzen mit 1 bezeichnete Schaltungsanordnung dient zum Betreiben eines Haushaltsgeräts, hier z.B. einer Waschmaschine, und umfasst einen Schaltungseingang 2 mit einem ersten und einem zweiten Eingangsanschluss 3, 4. Am Schaltungseingang 2 liegt eine Versorgungswechselspannung U_{N}, nämlich zwischen den Eingangsanschlüssen 3, 4. Mit dem Schaltungseingang 2 ist ein Schaltnetzteil 5 gekoppelt, welches die Versorgungswechselspannung U_{N} in eine erste Betriebsgleichspannung U₁ umwandelt.

Mit der ersten Betriebsgleichspannung U₁ ist eine erste Gruppe 6 von elektrischen Verbrauchern versorgbar, nämlich insbesondere Aktoren und Sensoren der Waschmaschine.

Die erste Betriebsgleichspannung U₁ wird zwischen einem Schaltungspol 7 und einem Bezugspotential 8 bereitgestellt. Mit dem Schaltungspol 7 ist ein Längsregler 9 gekoppelt, welcher die erste Betriebsgleichspannung U₁ in eine zweite Betriebsgleichspannung U₂ umwandelt. Die zweite Betriebsgleichspannung U₂ ist dabei wertmäßig niedriger als die erste Betriebsgleichspannung U₁, der Längsregler 9 dient zum Abwärtsstellen der ersten Betriebsgleichspannung U₁. Die zweite Betriebsgleichspannung U₂ liegt dabei zwischen einem Ausgangsanschluss 10 und dem Bezugspotential 8.

Mit der zweiten Betriebsgleichspannung U₂ wird eine Steuereinrichtung 11 versorgt, nämlich zum Beispiel ein Mikroprozessor oder eine vergleichbare Ansteuerschaltung.

Die Steuereinrichtung 11 kann die Schaltungsanordnung 1 zwischen einem Aktivzustand und einem Wartezustand überführen. Es entstehen nämlich bei der Umwandlung der ersten Betriebsgleichspannung U₁ in die zweite Betriebsgleichspannung U₂ Verluste, die durch den Längsregler 9 verursacht werden. Dabei gilt, dass je größer die Differenz zwischen der ersten Betriebsgleichspannung U₁ und der zweiten Betriebsgleichspannung U₂ ist, umso höher die Verluste sind. Im Aktivzustand erfordert die erste Gruppe 6 von elektrischen Verbrauchern beispielsweise 9 Volt (kann auch 12 Volt sein), wobei die Steuereinrichtung stets eine Gleichspannung von 5 Volt (kann auch 3,3 Volt sein) benötigt. Im Aktivzustand muss also die erste Betriebsgleichspannung U₁ = 9 Volt in die zweite Betriebsgleichspannung U₂ = 5 Volt umgewandelt werden. Die Differenz zwischen den beiden Spannungen beträgt 4 Volt, und die Verluste sind entsprechend groß. Um elektrische Energie zu sparen, wird die erste Betriebsgleichspannung U₁ im Wartezustand der Schaltungsanordnung 1 herabgesetzt, und zwar auf einen zweiten Wert, der zwischen der zweiten Betriebsgleichspannung U₂ = 5 Volt und dem ersten Wert der ersten Betriebsgleichspannung von U₁ = 9 Volt liegt. Um die Verluste auf ein Minimum zu reduzieren und dennoch ein Bereitstellen der zweiten Betriebsgleichspannung U₂ = 5 Volt zu ermöglichen, wird die erste Betriebsgleichspannung U₁ im Beispiel auf einen zweiten Wert von U₁ = 6 Volt herabgesetzt. Dies ermöglicht also das Bereitstellen der zweiten Betriebsgleichspannung U₂ = 5 Volt und reduziert zudem die durch den Längsregler 9 verursachten Verluste.

Im Wartezustand ist ein Ansteuern der ersten Gruppe 6 von elektrischen Verbrauchern nicht vorgesehen, so dass die Absenkung der ersten Betriebsgleichspannung U₁ auf den zweiten Wert den bestimmungsgemäßen Betrieb der Waschmaschine nicht beeinträchtigt.

Zum Einstellen der ersten Betriebsgleichspannung U₁ beim Umschalten zwischen dem Aktivzustand und dem Wartezustand sind Mittel vorgesehen, die in eine Regelschleife des Schaltnetzteils 5 eingreifen und einen Optokoppler 12, eine erste Zenerdiode 13 und eine zweite Zenerdiode 14 umfassen. Der Optokoppler 12 umfasst eine Diode 15, die auf optischem Wege einen Transistor 16 ansteuert. Die Anode der Diode 15 ist mit dem Schaltungspol 7 gekoppelt, und die Kathode der Diode 15 ist mit einem Pol 20 gekoppelt. Der Pol 20 ist sowohl mit der Kathode der ersten Zenerdiode 13 als auch mit der Kathode der zweiten Zenerdiode 14 gekoppelt. Die Anode der ersten Zenerdiode 13 liegt am Bezugspotential 8. Die Anode der zweiten Zenerdiode 14 ist über einen elektrischen Schalter 17 mit dem Bezugspotential 8 koppelbar. Der elektrische Schalter 17 kann dabei ein Relais oder ein Transistor sein. Der elektrische Schalter 17 kann über einen Treiber 18 durch die Steuereinrichtung 11 angesteuert, das heißt geschlossen beziehungsweise geöffnet werden.

Die Durchbruchsspannung der ersten Zenerdiode 13 beträgt im Beispiel 7 Volt. Diese Spannung von 7 Volt ergibt in Verbindung mit einer über der Diode 15 abfallenden Spannung von etwa 2 Volt insgesamt den ersten Wert der ersten Betriebsgleichspannung U₁ = 9 Volt. Im Aktivzustand der Schaltungsanordnung 1 ist der elektrische Schalter 17 geöffnet, das heißt die zweite Zenerdiode 14 ist von dem Bezugspotential 8 entkoppelt und hat somit keinen Einfluss auf die erste Betriebsgleichspannung U₁. Um die Schaltungsanordnung 1 in den Wartezustand zu überführen, schließt die Steuereinrichtung 11 den elektrischen Schalter 17. Dann fließt über die Diode 15 und die zweite Zenerdiode 14 elektrischer Strom hoher Stromstärke. Dieser Strom ist abhängig von der Durchbruchsspannung der zweiten Zenerdiode 14, die im Beispiel 4 Volt beträgt. Addiert man die Durchbruchsspannung der zweiten Zenerdiode 14 von 4 Volt und die über der Diode 15 abfallende Spannung von 2 Volt, so ergibt sich der zweite Wert der ersten Betriebsgleichspannung U₁ = 6 Volt.

Der nach dem Schließen des elektrischen Schalters 17 fließende Strom wird durch das Schaltnetzteil 5 erfasst, zu diesem Zwecke ist der Transistor 16 des Optokopplers 12 mit einem Regelanschluss 19 des Schaltnetzteils 5 gekoppelt. Fließt über die Diode 15 des Optokopplers 12 Strom, so wird der Transistor 16 durch die Diode 15 auf optischem Wege angesteuert und übermittelt an das Schaltnetzteil eine Führungsgröße, so dass das Schaltnetzteil 5 über den Regelanschluss 19 eine Rückkopplung erhält. Dann beginnt das Schaltnetzteil 5 die Betriebsgleichspannung U₁ auf den zweiten Wert, das heißt auf 6 Volt (4 Volt von der ersten Zenerdiode 14 + 2 Volt von der Diode 15), zu regeln. Das Schaltnetzteil 5 übernimmt also die Regelung der ersten Betriebsgleichspannung U₁ auf den zweiten Wert nach dem Schließen des elektrischen Schalters 17.

Wird der elektrische Schalter 17 geöffnet, wird die Schaltungsanordnung 1 in den Aktivzustand überführt. Nach dem Öffnen des Schalters 17 fließt über die Diode 15 fast überhaupt kein Strom mehr bzw. ein Strom vernachlässigbarer Stromstärke, und das Schaltnetzteil 5 beginnt, die erste Betriebsgleichspannung U₁ zu erhöhen. Diese Erhöhung gelingt aufgrund der Durchbruchsspannung der ersten Zenerdiode 13 nur bis zum ersten Wert der ersten Betriebsgleichspannung U₁ = 9 Volt.

Also wird an den Regelanschluss 19 des Schaltnetzteils eine Führungsgröße übermittelt, die die erste Betriebsgleichspannung U₁ einstellt. Es kann im Wesentlichen zwischen drei Zuständen der Führungsgröße unterschieden werden, denn der über die Diode 15 fließende elektrische Strom kann im Wesentlichen drei unterschiedliche Stromstärken aufweisen, nämlich eine erste vernachlässigbare Stromstärke, eine geringe Stromstärke und eine hohe Stromstärke. Ist der Schalter 17 geöffnet, das heißt die Schaltungsanordnung 1 befindet sich im Aktivzustand, so fließt über die Diode 15 ein Strom geringer Stromstärke. Wird der Schalter 17 geschlossen, so ist die Stromstärke dieses Stroms hoch, und das Schaltnetzteil beginnt, die erste Betriebsgleichspannung U₁ zu reduzieren. Wird der Schalter 17 wieder geöffnet, so ist die Stromstärke des Stroms vernachlässigbar, so dass das Schaltnetzteil 5 beginnt, die erste Betriebsgleichspannung U₁ zu erhöhen.

Es wird demnach insgesamt eine Schaltungsanordnung 1 bereitgestellt, bei welcher die durch den Längsregler 9 verursachten Verluste im Wartezustand auf ein Minimum reduziert werden können. Dies gelingt, indem die erste Betriebsgleichspannung U₁ von einem höheren ersten Wert von z.B. 9 Volt auf einen zweiten niedrigeren Wert von z.B. 6 Volt reduziert wird, wobei der zweite Wert der ersten Betriebsgleichspannung gerade noch höher als die zweite Betriebsgleichspannung U₂ liegt. Im Wartezustand wird somit nur derjenige elektrische Verbraucher mit elektrischer Energie versorgt, welcher mit der zweiten Betriebsgleichspannung U₂ gekoppelt ist. Dies ist hier die Steuereinrichtung 11, die das Umschalten der Schaltungsanordnung 1 zwischen dem Aktivzustand und dem Wartezustand steuert.

### Bezugszeichenliste

- 1: Schaltungsanordnung
- 2: Schaltungseingang
- 3: erster Eingangsanschluss
- 4: zweiter Eingangsanschluss
- 5: Schaltnetzteil
- 6: erste Gruppe elektrischer Verbraucher
- 7: Schaltungspol
- 8: Bezugspotential
- 9: Längsregler
- 10: Ausgangsanschluss
- 11: Steuereinrichtung
- 12: Optokoppler
- 13: erste Zenerdiode
- 14: zweite Zenerdiode
- 15: Diode
- 16: Transistor
- 17: Schalter
- 18: Treiber
- 19: Regelanschluss
- 20: Pol
- U_{N}: Versorgungswechselspannung
- U₁: erste Betriebsgleichspannung
- U₂: zweite Betriebsgleichspannung

## Patentansprüche

1. Haushaltsgerät mit einer Schaltungsanordnung (1) zum Betreiben des Haushaltsgeräts, mit:
- einem Schaltungseingang (2) zum Anlegen einer Versorgungswechselspannung (U_{N}),
- einem mit dem Schaltungseingang (2) gekoppelten Schaltnetzteil (5) zum Bereitstellen einer ersten Betriebsgleichspannung (U₁) zwischen einem Schaltungspol (7) und einem Bezugspotential (8), wobei mit der ersten Betriebsgleichspannung (U₁) zumindest ein erster elektrischer Verbraucher (6) versorgbar ist,
- einem mit dem Schaltungspol (7) gekoppelten Spannungswandler (9) zum Bereitstellen einer zweiten Betriebsgleichspannung (U₂) für zumindest einen zweiten elektrischen Verbraucher (11), wobei die zweite Betriebsgleichspannung (U₂) wertmäßig niedriger als die erste Betriebsgleichspannung (U₁) ist,
- einer Steuereinrichtung (11), die dazu ausgelegt ist, die Schaltungsanordnung (1) zwischen einem Aktivzustand und einem Wartezustand umzuschalten,
wobei Mittel (12, 13, 14) zum Einstellen der ersten Betriebsgleichspannung (U₁) bereitgestellt sind, die im Aktivzustand der Schaltungsanordnung (1) die erste Betriebsgleichspannung (U₁) auf einen ersten Wert einstellen und beim Umschalten in den Wartezustand die erste Betriebsgleichspannung (U₁) von dem ersten Wert auf einen zweiten Wert absenken,
wobei die Mittel (12, 13, 14) zum Einstellen der ersten Betriebsgleichspannung (U₁) mit einem Regelanschluss (19) des Schaltnetzteils (5) gekoppelt sind und zum Übermitteln einer Führungsgröße an den Regelanschluss (19) ausgebildet sind,
und wobei das Schaltnetzteil (5) zum Steuern der ersten Betriebsgleichspannung (U₁) abhängig von der Führungsgröße ausgebildet ist,
**dadurch gekennzeichnet, dass**
die Mittel (12, 13, 14) zum Einstellen der ersten Betriebsgleichspannung (U₁) einen Optokoppler (12) umfassen, dessen Transistor (16) mit dem Regelanschluss (19) des Schaltnetzteils (5) gekoppelt ist und dessen Diode (15) einerseits mit dem Schaltungspol (7) und andererseits über eine erste Zenerdiode (13) mit dem Bezugspotential (8) gekoppelt ist, wobei eine zweite Zenerdiode (14) parallel zur ersten Zenerdiode (13) schaltbar ist, und die erste Zenerdiode (13) eine solche Durchbruchsspannung aufweist, die auf den ersten Wert der ersten Betriebsgleichspannung (U₁) abgestimmt ist, und die zweite Zenerdiode (14) eine solche Durchbruchsspannung aufweist, die auf den zweiten Wert der ersten Betriebsgleichspannung (U₁) abgestimmt ist.

2. Haushaltsgerät nach Anspruch 1, **dadurch gekennzeichnet, dass** die Mittel (12, 13, 14) zum Einstellen der ersten Betriebsgleichspannung (U₁) derart ausgebildet sind, dass der zweite Wert der ersten Betriebsgleichspannung (U₁) zwischen der zweiten Betriebsgleichspannung (U₂) und dem ersten Wert der ersten Betriebsgleichspannung (U₁) liegt.

3. Haushaltsgerät nach Anspruch 1 oder 2, **dadurch gekennzeichnet, dass** die zweite Zenerdiode (14) mit einem elektrischen Schalter (17) in Reihe geschaltet ist, und die Steuereinrichtung (11) dazu ausgebildet ist, den elektrischen Schalter (17) zu schließen, um die Schaltungsanordnung (1) in den Wartezustand zu überführen.

4. Haushaltsgerät nach einem der vorhergehenden Ansprüche, **dadurch gekennzeichnet, dass** der Spannungswandler (9) ein Spannungsregler ist.

5. Haushaltsgerät nach einem der vorhergehenden Ansprüche, **dadurch gekennzeichnet, dass** eine Bedieneinrichtung mit der Steuereinrichtung (11) gekoppelt ist, mittels welcher ein Eingabesignal erzeugbar und an die Steuereinrichtung (11) übermittelbar ist, welches das Umschalten der Schaltungsanordnung (1) zwischen dem Aktivzustand und dem Wartezustand bewirkt.

6. Haushaltsgerät nach einem der vorhergehenden Ansprüche, **dadurch gekennzeichnet, dass** die Steuereinrichtung (11) dazu ausgebildet ist, die Schaltungsanordnung (1) zwischen dem Aktivzustand und dem Wartezustand abhängig von einer Auswertung eines Taktsignals umzuschalten.

7. Verfahren zum Betreiben eines Haushaltsgeräts, mit den Schritten:
- Bereitstellen einer Versorgungswechselspannung (U_{N}) an einem Schaltungseingang (2) einer Schaltungsanordnung (1),
- aus der Versorgungswechselspannung (U_{N}) Bereitstellen einer ersten Betriebsgleichspannung (U₁) zwischen einem Schaltungspol (7) und einem Bezugspotential (8) durch ein Schaltnetzteil (5), wobei mit der ersten Betriebsgleichspannung (U₁) zumindest ein erster elektrischer Verbraucher (6) versorgt wird,
- aus der ersten Betriebsgleichspannung (U₁) Bereitstellen einer zweiten Betriebsgleichspannung (U₂) für zumindest einen zweiten elektrischen Verbraucher (11) mittels eines Spannungswandlers (9), wobei die zweite Betriebsgleichspannung (U₂) wertmäßig niedriger als die erste Betriebsgleichspannung (U₁) ist,
- Umschalten der Schaltungsanordnung (1) zwischen einem Aktivzustand und einem Wartezustand mittels einer Steuereinrichtung (11),
wobei die erste Betriebsgleichspannung (U₁) im Aktivzustand auf einen ersten Wert eingestellt und beim Umschalten auf den Wartezustand von dem ersten Wert auf einen zweiten Wert herabgesetzt wird
wobei die Betriebsgleichspannung (U₁) durch das Schaltnetzteil (5) abhängig von einer Führungsgröße, die an einen Regelanschluss (19) des Schaltnetzteils (5) übermittelt wird, gesteuert wird,
**dadurch gekennzeichnet, dass**
die Regelgröße mittels eines Optokopplers (12) an den Regelanschluss (19) übermittelt wird, dessen Transistor (16) mit dem Regelanschluss (19) des Schaltnetzteils (5) gekoppelt ist und dessen Diode (15) einerseits mit dem Schaltungspol (7) und andererseits über eine erste Zenerdiode (13) mit dem Bezugspotential (8) gekoppelt ist, wobei eine zweite Zenerdiode (14) parallel zur ersten Zenerdiode (13) geschaltet wird, und die erste Zenerdiode (13) eine solche Durchbruchsspannung aufweist, die auf den ersten Wert der ersten Betriebsgleichspannung (U₁) abgestimmt ist, und die zweite Zenerdiode (14) eine solche Durchbruchsspannung aufweist, die auf den zweiten Wert der ersten Betriebsgleichspannung (U₁) abgestimmt ist.

8. Verfahren nach Anspruch 7, **dadurch gekennzeichnet, dass** der zweite Wert der ersten Betriebsgleichspannung (U₁) zwischen der zweiten Betriebsgleichspannung (U₂) und dem ersten Wert der ersten Betriebsgleichspannung (U₁) liegt.

9. Verfahren nach Anspruch 7 oder 8, **dadurch gekennzeichnet, dass** ein Eingabesignal durch eine Bedieneinrichtung erzeugt und an die Steuereinrichtung (11) übermittelt wird, welches das Umschalten der Schaltungsanordnung (1) zwischen dem Aktivzustand und dem Wartezustand bewirkt.

10. Verfahren nach einem der Ansprüche 7 bis 9, **dadurch gekennzeichnet, dass** das Umschalten zwischen dem Aktivzustand und dem Wartezustand abhängig von einer Auswertung eines Taktsignals der Steuereinrichtung (11) erfolgt.
